# FASCICULE DE BREVET EUROPEEN

(11) **EP 0 408 417 B1**
(45) Date de publication et mention de la délivrance du brevet: **02.02.1994**
(21) Numéro de dépôt: 90401876.9
(22) Date de dépôt: 28.06.1990
(51) Int. Cl.: A01B 43/00

(54) **Dispositif de calibrage et de confinement pour andaineuse de pierres tirée par un tracteur, du type comprenant deux axes, déployés en "V" par rapport à l'axe d'avancement du tracteur, ces axes portant par ailleurs une denture souple et vibrante**
Klassierungs- und Einschliessungsvorrichtung für von einem Traktor gezogenen Stein-Schwadformer, der zwei in bezug auf die Fahrtrichtung des Traktors im "V" ausgebreitete Schenkel besitzt, die ausserdem nachgiebige und schwingungsfähige Zahnungen tragen
Classifying and enclosing device for a stone swath former drawn by a tractor, of the type having two axes forming a "V" with respect to the direction of motion of the tractor, and having resilient and vibratable teeth

(30) Priorité: 03.07.1989 FR 8908902
(43) Date de publication de la demande: 16.01.1991
(73) Titulaire: Masure, Jacques, F-89310 Noyers (FR)
(72) Inventeur: Masure, Jacques, F-89310 Noyers (FR)
(74) Mandataire: Bruder, Michel

(56) Documents cités:
- FR-A- 1 283 266
- FR-A- 2 340 673
- FR-A- 2 344 210
- FR-E- 32 114

## Description

La présente invention concerne un dispositif de calibrage et de confinement pour andaineuse de pierres tirée par un tracteur, du type comprenant deux axes, déployés en "V" par rapport a l'axe d'avancement du tracteur, ces axes portant par ailleurs une denture souple et vibrante.

Dans de nombreuses régions, le sol est encombré de cailloux de toutes tailles qui constituent une entrave à la culture. Des campagnes de ramassages de ces cailloux doivent alors être régulièrement organisées, et il est usuel d'utiliser à cet effet des machines spécifiques, appelées épierreurs ou andaineuses de pierres. Ces machines se présentent sous des morphologies variées qui témoignent du grand nombre de solutions techniques offertes, et on connait principalement les machines à rotor muni de dents rigides, disposées par exemple en hélice, et les machines du type comprenant deux axes déployés en "V" et portant une denture rigide ou souple.

Sur une machine du premier type, le rotor, en tournant, fait migrer les pierres encombrant le sol vers le côté, où elles forment un andain que l'on peut ensuite ramasser ou concasser sur place. Les andaineuses à rotor sont néanmoins des machines lourdes, coûteuses, et peu rapides, qui nécessitent en particulier de relier le rotor à la source d'énergie du tracteur assurant la traction.

Une andaineuse du second type procure l'avantage de la simplicité. Deux bras, disposés obliquement en "V" par rapport à l'axe d'avancement du tracteur par lequel elle est tirée, portent des dents juxtaposées en peigne ; ces dents viennent fouiller l'immédiate superficie du sol et permettent le dépierrage et la migration des pierres vers la base du "V", dirigé à cet effet vers l'arrière du sens de déplacement. On retrouve notamment cette configuration générale des andaineuses de pierres dans les brevets français FR-1 283 266, FR-2 344 210 et FR-2 340 673.

Ce dernier document décrit plus particulièrement un perfectionnement important de ces machines. La denture traditionnelle rigide, constituant le peigne porté par chaque bras en vue de ratisser le sol, est remplacée par un ensemble de griffes vibrantes, amovibles, et dont on peut varier l'écartement ; ces griffes, par exemple du type ayant une forme connue en "col de cygne", extirpent les pierres du sol et les débarrassent, en vibrant, de la terre qui y est amalgamée.

Les dentures conventionnelles rigides n'assurent quant à elles aucune sélection entre la terre, les pierres, les racines et autres débris végétaux, l'andain formé a l'arrière de la machine étant ainsi très hétérogène et difficile à traiter. En outre, une denture rigide devient vite encombrée et n'assure plus, au bout d'un certain temps, son travail de ratissage.

Un inconvénient majeur des andaineuses à bras en "V", même perfectionnées dans le sens du brevet FR-2 340 673, limite néanmoins considérablement le développement de ces machines par rapport aux andaineuses à rotor, considérées pourtant comme étant moins rapides. La migration des pierres déterrées, d'une extrémité antérieure d'un bras du "V" vers la base de ce "V" où est formé l'andain, demeure incomplète. On comprend en effet aisément que la densité de pierres augmente régulièrement le long d'un bras, depuis l'extrémité antérieure de celui-ci où les pierres commencent à être ratissées, jusqu'à sa partie postérieure à la base du "V" ; en effet, les pierres ayant migrées vers l'arrière s'accumulent autour des griffes vibrantes, encombrent la zone d'action positive de ces griffes, gênent leur action et s'échappent au fur et à mesure de l'intérieur du "V", en passant dans l'intervalle situé entre deux griffes, sans avoir eu le temps de cheminer jusqu'à la sortie prévue à la base du "V" pour former un andain - cet accroissement de densité des pierres vers l'arrière de la machine est notamment visible lorsqu'on regarde celle-ci en action, le nuage de poussières dégagé, sur terrain sec, par cette dernière, étant plus important derrière que devant -. L'andain de pierres obtenu de cette façon avec les andaineuses conventionnelles à bras en "V" munis de dents vibrantes, s'il est de bonne qualité par son homogénéité, ne contient pas l'ensemble des pierres qui devraient s'y trouver, étant donné l'écartement des dents et la hauteur des bras par rapport au sol ; certaines grosses pierres restent dispersées sur le sol hors de l'andain et leur ramassage manuel est alors indispensable.

La présente invention vise à remédier à cet inconvénient en proposant un dispositif de calibrage et de confinement pour andaineuse de pierres à bras obliques déployés en "V" et munis de dents vibrantes disposées en peigne caractérisé en ce qu'au moins une barre, ou une série de barres plus courtes, est disposée à l'extérieur de la rangée des dents vibrantes portées par chaque bras suivant une direction sensiblement parallèle à la direction de ce bras, et que la garde au sol de la ou des barres est réglable par rapport à ces bras, l'écartement des dents vibrantes entre elles et la hauteur de la ou des barres imposant le calibre maximal des pierres pouvant latéralement s'échapper à l'extérieur dudit "V" après avoir été ratissées en amont de l'andaineuse.

Le dispositif conforme à l'invention remédie ainsi de manière avantageuse aux inconvénients précités des andaineuses à bras en "V". Un de ses buts est de renforcer par ailleurs l'efficacité de l'alignement des pierres, notamment sur les terrains difficiles, boueux, encombrés de débris végétaux, ou de niveau inégal. Un autre de ses buts est d'améliorer la sélectivité des dents en amplifiant le phénomène de vibration de celles-ci.

D'autres caractéristiques et avantages du dispositif de calibrage et de confinement pour andaineuse de pierres suivant l'invention ressortiront mieux de la description qui va suivre d'un mode de réalisation donné à titre d'exemple non limitatif de ce dispositif en référence au dessins annexés sur lesquels :
- la figure 1 est une vue de dessus en perspective d'une andaineuse de pierres conforme à l'invention,
- la figure 2 est une vue latérale extérieure en perspective du détail d'un bras portant des dents vibrantes, et sur laquelle sont également représentées des barres de calibrage et de confinement conformes à une première variante de réalisation de l'invention,
- la figure 3 est une vue latérale extérieure en perspective du détail d'un bras portant de dents vibrantes, muni d'un dispositif de calibrage et de confinement conforme à une deuxième variante de réalisation de l'invention.

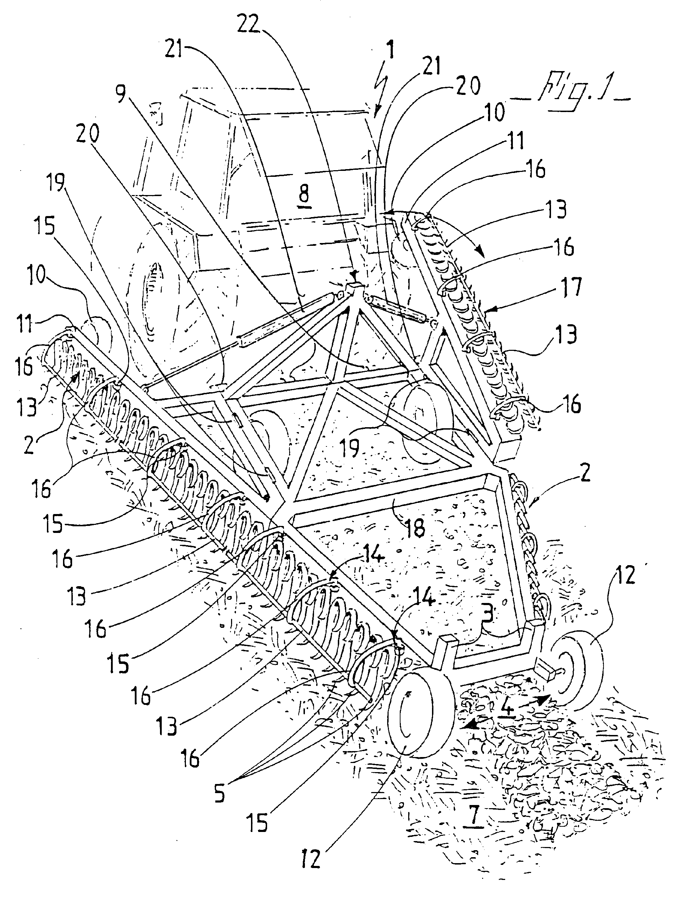

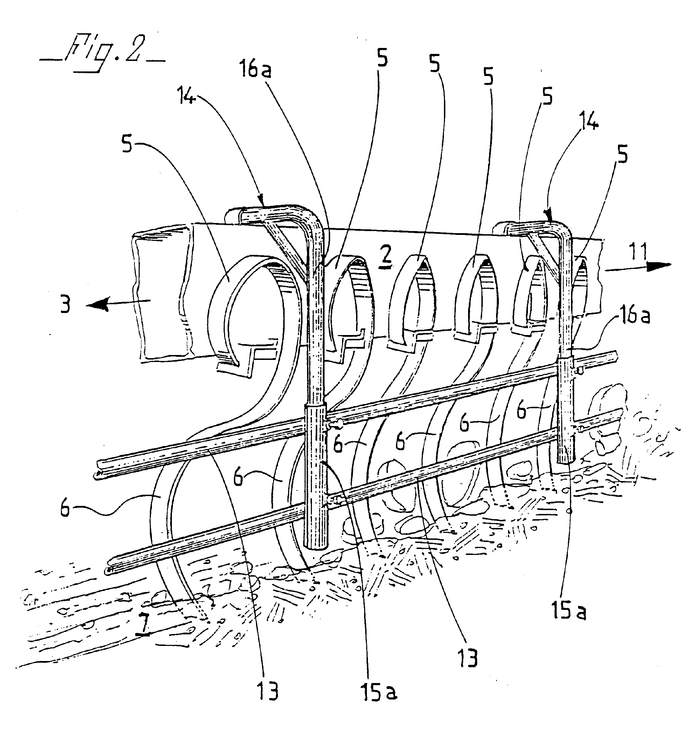

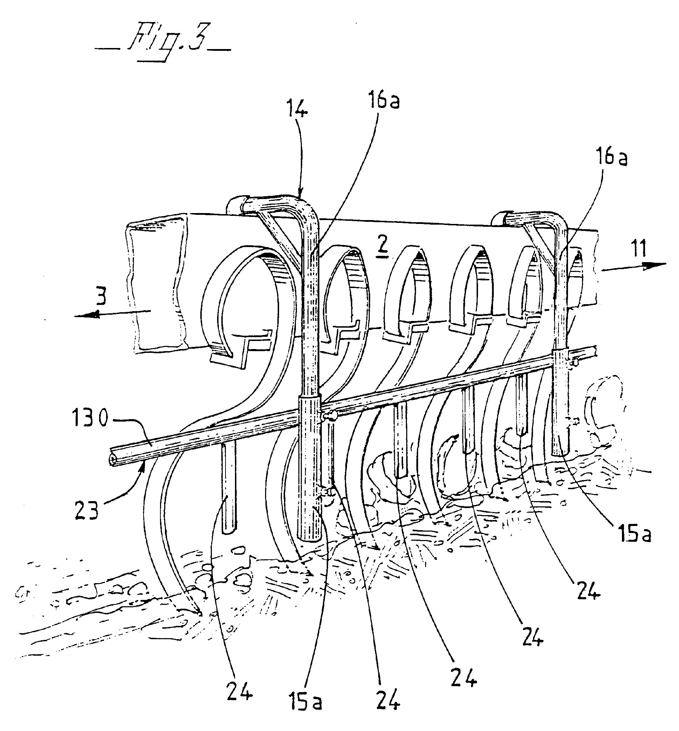

Conformément à la figure 1, l'andaineuse de pierres 1 conforme à l'invention comporte un ensemble de deux bras 2 déployés en "V", convergents vers leur extrémité postérieure 3, de manière à laisser un passage 4 suivant l'axe de déplacement de l'andaineuse 1, qui partage préférentiellement ledit "V" deux surfaces égales. Chacun des bras 2 porte une rangée de dents vibrantes 5 disposées en peigne dans un plan sensiblement parallèle au plan médian vertical de l'andaineuse 1. Ces dents 5 peuvent par exemple posséder une forme classique en "col de cygne", la griffe postérieure 6 (fig.2,3) d'une dent 5 tournant sa concavité vers l'avant de l'andaineuse 1, de manière à fouiller la superficie du sol 7 et à ramener à la surface les pierres qui y sont enfouies. L'andaineuse 1 est tirée derrière un tracteur 8, schématiquement représenté sur la figure 1, par l'intermédiaire, par exemple, d'un dispositif de relevage trois points, courant sur un tracteur 8, et dont on ne voit que deux des points d'articulation 9. Des roues porteuses pivotantes 10, situées à l'extrémité antérieure 11 des bras 2 composant le "V" de l'andaineuse 1, et des roues porteuses 12 situées à l'extrémité arrière 3 desdits bras 2, permettent de déplacer l'andaineuse 1 et sont par ailleurs réglables en hauteur, de manière à pouvoir contrôler l'enfoncement des dents vibrantes 5 dans le sol 7.

L'écartement de deux dents 5, en rapport avec la hauteur de la partie de ces dents 5 non enfoncées dans le sol 7, fournissent un premier calibrage des pierres.

Une barre 13, ou une série de barres 13 plus courtes disposées longitudinalement en succession, est disposée à l'extérieur de la rangée des dents vibrantes 5 portées par chaque bras 2, suivant une direction sensiblement parallèle à la direction de ces bras 2.

Le fonctionnement de l'andaineuse 1 décrite précédemment est le suivant : le tracteur 8, attaché par les points de fixation 9 à l'andaineuse 1, tire celle-ci dans le sens de la flèche F, de manière a ce que le "V" ait sa base vers l'arrière. Les pierres déterrées tout le long des bras 2 par l'action des dents vibrantes 5, sont repoussées progressivement lors de l'avancement du tracteur 8 et de l'andaineuse 1, vers les extrémités postérieures 3 des bras 2, où elles sont regroupées et forment un andain dont la largeur est sensiblement égale à la largeur du passage 4 prévu à cet effet entre les extrémités 3 des bras 2. Il est clair que les pierres provenant des extrémités antérieures 11 des bras 2 ont un chemin relativement long à parcourir pour parvenir à la sortie 4 de l'andaineuse 1, et il peut arriver que ces pierres viennent encombrer l'interstice situé entre deux dents vibrantes 5, lors de leur migration vers la sortie 4. L'avancement du tracteur 8 et de l'andaineuse 1 pourrait alors provoquer leur échappement latéral à l'extérieur du "V", formé par l'association des deux bras 2, rendant ainsi inefficace l'andaineuse 1.

La barre 13, ou la série de barres 13, permet alors avantageusement de confiner les pierres encombrant l'interstice de deux ou plusieurs dents vibrantes 5 et empêchent leur échappement latéral à l'extérieur dudit "V". Il convient de noter qu'on utilise préférentiellement une série de barres 13 sensiblement alignées, plus courtes qu'une unique barre 13 disposée tout le long d'un bras 2, et donc plus maniables.

La garde au sol des barres 13 est réglable et, de manière inattendue, permet de procéder à un second calibrage des pierres déterrées par les dents vibrantes 5, de façon à ne laisser sur le sol 7, derrière l'andaineuse 1, que des pierres dont la taille ne gène pas les cultures.

En outre, et conformément à la figure 2, il est possible d'aménager, à l'extérieur des dents vibrantes 5, une ou plusieurs séries de barres 13 placées côte à côte, et espacées les unes des autres en fonction du calibre des pierres que l'on veut, ou non, laisser passer latéralement vers l'extérieur du "V". Toutes les combinaisons sont possibles entre le nombre de barres 13, disposées à l'extérieur des dents vibrantes 5, et les espacements de ces barres, et l'homme de métier peut aisément déterminer la configuration qui convient le mieux à la nature des pierres (pierres dures, pierres plates, pierres rondes) et à la nature du sol 7.

Il pourra par exemple être avantageux de faire varier graduellement la garde au sol de la série de barres 13, d'une extrémité 3 d'un bras 2 à son autre extrémité 11, afin de tenir compte de l'encombrement plus important des pierres à l'arrière de l'andaineuse 1.

Il est prévu, conformément aux figures 1 et 2, un moyen de réglage 14 de la hauteur desdites barres 13 par rapport au sol 7. Ce moyen de réglage 14 peut, sans limitation, être un système à vis, un système à glissières, un système hydraulique, un système pneumatique, un système à coulisses, etc... On a choisi, sur la figure 1, de le représenter par un système à coulisseau 15, dont le réglage manuel est effectué préalablement à l'utilisation de l'andaineuse 1 ; pour ce faire, des barres courbes 16 peuvent coulisser dans les coulisseaux 15 et sont solidaires des barres 13 à leur extrémité basse. Le dégagement procuré par la courbure vers l'extérieur des barres 36 ménage avantageusement un espace d'intervention au-dessus des dents 5 et permet notamment d'effectuer aisément leur remplacement, en cas de rupture. Un autre moyen de réglage 14 est représenté sur la figure 2 : des barres droites 16a sont fixées au bras 2 et une coulisse 15a, solidaire des barres 13, permet de régler leur hauteur par rapport au sol.

Suivant une autre caractéristique de l'invention, et conformément à la figure 2, les barres 13 sont en contact permanent avec les dents 5, et selon leur hauteur par rapport au sol, sont en appui positif sur une partie différente des dents 5.

Cette disposition améliore notablement l'efficacité du dispositif de calibrage et de confinement conforme à l'invention.

En effet, les pierres ayant réussi à s'immiscer dans l'interstice situé entre deux dents vibrantes 5 ne doivent pas pouvoir rester coincées entre ces dents 5 et les barres 13, mais au contraire être repoussées par celles-ci, sous l'action de l'avancement du tracteur 8 et de l'andaineuse 1, de manière à poursuivre leur migration vers l'extrémité 3 des bras 2 de l'andaineuse 1, où elles viennent grossir l'andain de pierres derrière le passage 4. C'est pourquoi, si les barres 13 ne sont pas en contact avec les dents 5, des pierres, en particulier plates, pourraient venir se loger entre ces barres 13 et les dents 5. On améliore donc sensiblement le fonctionnement de l'andaineuse 1 conforme a l'invention en prévoyant de mettre en contact permanent les barres 13 avec les dents vibrantes 5.

Par ailleurs, ce contact permanent des barres 13 avec les dents 5 procure un avantage inattendu qui améliore sensiblement la sélectivité des dents vibrantes 5, vis-à-vis des pierres, par rapport à la gangue de terre qui les entoure, aux racines, ou autres débris végétaux présents dans le sol 7. Les dents 5 transmettent en effet leur vibration à la barre 13 ou aux barres 13, cette vibration étant donc amplifiée tout le long d'un bras 2, ce qui permet de séparer d'autant mieux les pierres de la terre.

Il convient de noter également que les barres 13, qui sont normalement en métal, mais peuvent être constituées par tout autre matériau habituel dans le domaine de l'agriculture. La forme de ces barres 13 est en outre indifférente vis-à-vis de leur efficacité ; elles peuvent être rondes, plates, en "U", se présenter sous forme de cornières ou autre profilés.

Suivant une autre caractéristique de l'invention, les bras 2, composant le "V" de l'andaineuse 1, sont articulés de manière à ce que le relevage à la verticale d'une de leur partie 17 permette le transport de l'andaineuse 1 sur route. Ce système de relevage est distinct du dispositif de relevage trois points, présent conventionnellement sur le tracteur 8, et qui permet uniquement de relever l'ensemble de l'andaineuse 1 par rapport au sol 7.

Conformément à la figure 1, le dispositif de relevage des bras 2 à la verticale, et qui permet de réduire l'encombrement latéral de l'andaineuse 1, est réalisé, par exemple, de la manière suivante : le châssis 18 reliant entre eux les bras 2 de l'andaineuse 1, est articulé suivant l'axe longitudinal d'avancement de l'andaineuse 1, au moyen de charnières 19, dont le blocage et le verrouillage en position ouverte est assurée par des brides 20, maintenant à cet effet, entre elles, les parties du châssis 18 séparées par les charnières 19. Un dispositif à vérins 21 reliant une partie 22 du châssis 18 de l'andaineuse 1 à la partie mobile 17 des bras 2, assure pour l'essentiel le relevage desdits bras 2 à la verticale, ou sensiblement à la verticale.

Enfin, conformément à la figure 3, et suivant une autre variante de réalisation du dispositif de calibrage et de confinement des pierres suivant l'invention, un peigne 23, comprenant une barre longitudinale 130 est disposé suivant un axe sensiblement parallèle à la rangée des dents vibrantes 5, à l'extérieur de celles-ci. Un ensemble de dents rigides 24 avantageusement perpendiculaires à cette barre 130, s'étendent vers le sol 7 sur une longueur appropriée, entre les interstices situés entre deux dents 5 portées par un bras 2, de manière à faire obstruction aux pierres s'immiscant dans ces interstices. La hauteur du peigne 23 est réglable, ainsi que l'écartement de chacune des dents rigides 24 perpendiculaires à la barre longitudinale 130.

L'andaineuse 1 suivant l'invention se déplace à une vitesse comprise entre 7 et 10 km/h qui dépend de la nature du terrain. Cette vitesse élevée pour une machine à épierrer le sol peut être atteinte, sans perte d'efficacité sur l'andainage, grâce au dispositif de confinement et de calibrage objet de l'invention.

Etant donné que diverses modifications peuvent être apportées aux formes de réalisation décrites ci-dessus sans se départir du cadre de l'invention comme défini par les revendications, il est entendu que tous les détails contenus dans la description ci-dessus ou illustrés dans les dessins annexés sont donnés à titre d'illustration et non dans un sens limitatif.

Le dispositif conforme à l'invention est utilisable dans le domaine de l'épierrage des terrains caillouteux, les andains de pierres obtenus ayant une composition homogène facilitant leur ramassage ou leur concassage sur place.

## Revendications

1. Dispositif de calibrage et de confinement pour andaineuse de pierres (1) à bras obliques (2) déployés en "V" et munis de dents vibrantes (5) disposées en peigne caractérisé en ce qu'au moins une barre (13, 130), ou une série de barres (13, 130) plus courtes, est disposée à l'extérieur de la rangée des dents vibrantes (5) portées par chaque bras (2) suivant une direction sensiblement parallèle à la direction de ce bras (2), et que la garde au sol de la ou des barres (13) est réglable par rapport à ces bras, l'écartement des dents vibrantes (5) entre elles et la hauteur de ladite ou desdites barres (13) imposant le calibre maximal des pierres pouvant latéralement s'échapper à l'extérieur dudit "V" après avoir été ratissées en amont de l'andaineuse (1).

2. Dispositif de calibrage et de confinement selon la revendication 1, caractérisé en ce que la garde au sol de la série de barres (13) varie graduellement d'une extrémité d'un bras (2) à son autre extrémité, afin de tenir compte de l'encombrement plus important des pierres à l'arrière de l'andaineuse (1).

3. Dispositif de calibrage et de confinement selon l'une quelconque des revendictions précédentes, caractérisé en ce qu'il comporte un peigne (23) formé d'une barre longitudinale (130) et de dents rigides (24) avantageusement perpendiculaires à cette barre (23), lesdites dents rigides (24) s'étendant vers le sol (7), au niveau de chaque interstice entre deux dents vibrantes (5), sur une longueur appropriée pour faire obstacle aux pierres d'une taille déterminée.

4. Dispositif de calibrage et de confinement selon l'une quelconque des revendictions précédentes, caractérisé en ce que la ou les barres (13, 130) sont en contact permanent avec les dents vibrantes (5) portées par chacun des bras (2) de l'andaineuse (1), ce qui procure l'avantage d'éviter à des pierres de se coincer entre les dents vibrantes (5) et la ou les barres (13, 130), et améliore par ailleurs la séparation entre les pierres et la gangue de terre pouvant les entourer, par amplification dans les barres (13, 130) de la vibration procurée par lesdites dents (5).

## Patentansprüche

1. Klassierungs- und Eingrenzungsvorrichtung für einen Stein-Schwadenrechen (1) mit schrägen Armen (2), die in Form eines "V" angeordnet und mit schwingenden, einen Kamm bildenden Zinken (5) versehen sind, **dadurch gekennzeichnet**, daß mindestens eine Stange (134, 130) oder eine Reihe von kürzeren Stangen (13, 130) außerhalb des Bereiches der von dem jeweiligen Arm (2) getragenen schwingenden Zinken (5) in einer zur Richtung des betreffenden Armes (2) im wesentlichen parallelen Richtung angeordnet sind, und daß die Bodenfreiheit der besagten Stange oder Stangen (13) bezuglich der Arme einstellbar ist, wobei der gegenseitige Abstand der schwingenden Zinken (5) und die Höhe der Stange oder Stangen (13) die maximale Abmessung der Steine bestimmen, die zum äußeren des "V" entweichen können, nachdem sie vom Schwadenrechen (1) vorne zusammengerecht worden waren.

2. Klassierungs- und Eingrenzungsvorrichtung nach Anspruch 1, **dadurch gekennzeichnet**, daß die Bodenfreiheit der Reihe von Stangen (13) vom einen Ende eines Armes (2) zu seinem anderen Ende hin allmählich sich ändert, um einem größeren Platzbedarf der Steine am hinteren Ende des Schwadenrechens (1) Rechnung zu tragen.

3. Klassierungs- und Eingrenzungsvorrichtung nach einem der vorhergehenden Ansprüche, **dadurch gekennzeichnet**, daß sie einen Kamm (23) aus einer longitudinalen Stange (130) und auf dieser Stange (23) vorteilhafterweise senkrecht stehenden starren Zähnen (24) enthält, welche sich im Bereich der jeweiligen Zwischenräume zwischen zwei schwingenden Zinken (5) in Richtung auf den Boden (7) hin über eine geeignete Länge erstrecken, um ein Hindernis für Steine einer bestimmten Größe zu bilden.

4. Klassierungs- und Eingrenzungsvorrichtung nach einem der vorhergehenden Ansprüche, **dadurch gekennzeichnet**, daß die Stange oder Stangen (13, 130) in dauernder Berührung mit den schwingenden Zinken (5) stehen, die von den jeweiligen Armen (2) des Schwadenrechens (1) getragen werden, was den Vorteil ergibt, daß ein Verkeilen der Steine zwischen den schwingenden Zinken und den Stangen (13, 130) verhindert wird und außerdem die Trennung zwischen den Steinen und der sie gegebenenfalls umgebenden Erde durch Verstärkung der durch die Zinken (5) bewirkten Schwingung in den Stangen (13, 130) zu verbessern.

## Claims

1. Classifying and enclosing device for stone swath former (1) with oblique arms (2) opened out in "V" form and provided with vibrating teeth (5) disposed as a comb, characterized in that at least one bar (13, 130) or a series of shorter bars (13, 130) is disposed outside the row of vibrating teeth (5) borne by each arm (2) in a direction substantially parallel to the direction of this arm (2), and in that the ground clearance of the bar or bars (13) is adjustable with respect to these arms, the distance between the vibrating teeth (5) and the height of said bar or bars (13) imposing the maximum size of the stones which may laterally escape to outside said "V" after having been scraped upstream of the swath former (1).

2. Classifying and enclosing device according to Claim 1, characterized in that the ground clearance of the series of bars (13) varies gradually from one end of an arm (2) to its other end, in order to take into account the larger dimensions of the stones at the rear of the swath former (1).

3. Classifying and enclosing device according to either one of the preceding Claims, characterized in that it comprises a comb (23) formed by a longitudinal bar (130) and rigid teeth (24) advantageously perpendicular to this bar (23), said rigid teeth (24) extending towards the ground (7), at the level of each interstice between two vibrating teeth (5), over an appropriate length to form an obstacle against the stones of a determined size.

4. Classifying and enclosing device according to any one of the preceding Claims, characterized in that the bar or bars (13, 130) are in permanent contact with the vibrating teeth (5) borne by each of the arms (2) of the swath former (1), which procures the advantage of avoiding stones being wedged between the vibrating teeth (5) and the bar or bars (13, 130), and furthermore improves the separation between the stones and the gangue of earth which may surround them, by amplification in the bars (13, 130) of the vibration procured by said teeth (5).
